# EUROPEAN PATENT APPLICATION

(11) **EP 4 534 477 A1**
(43) Date of publication of application: **09.04.2025**
(21) Application number: 23816315.8
(22) Date of filing: 26.05.2023
(51) Int. Cl.: C01B 25/455, H01M 10/0567

(54) **METHOD FOR PREPARING LITHIUM DIFLUOROPHOSPHATE SALT FOR LITHIUM SECONDARY BATTERY**

(30) Priority: 31.05.2022 KR 20220066736; 25.05.2023 KR 20230067797
(71) Applicant: EP CHEMTECH CO., LTD., Chungcheongbuk-do 27651 (KR)
(72) Inventor: LEE, Soon Ho, Gunsan-si, Jeollabuk-do 54082 (KR)
(74) Representative: Global IP Europe Patentanwaltskanzlei
(86) International application number: PCT/KR2023/007278
(87) International publication number: WO 2023/234654

(57) **Abstract**

The present invention relates to a method for preparing lithium difluorophosphate salt in high yield by using low-unit-cost raw materials. In particular, the present invention relates to a method for preparing lithium difluorophosphate salt with high purity and high yield by preparing same without using lithium hexafluorophosphate salt. Therefore, the lithium difluorophosphate salt prepared according to the present invention may be used in an electrolyte for a lithium secondary battery, and when used in an electrolyte for a lithium secondary battery, has electrochemical property, output, and gas reduction effects, and so on.

## Description

### [Technical Field]

The present invention relates to a method for preparing lithium difluorophosphate salt in high yield by using low-unit-cost raw materials. In addition, the present invention relates to lithium difluorophosphate salt with reduced impurities. In particular, the present invention relates to a method for preparing lithium difluorophosphate salt with high purity and high yield without using lithium hexafluorophosphate salt and relates to lithium difluorophosphate salt with high purity prepared therefrom. The lithium difluorophosphate salt prepared according to the present invention may be used in an electrolyte for a lithium secondary battery, and has effects of enhancing electrochemical properties, providing high output, reducing gas, and so on when used in the electrolyte for the lithium secondary battery.

### [Background Art]

Lithium secondary batteries are widely used in the field of small high-tech electronic devices such as mobile devices, notebook computers, etc. Due to the spread of electric vehicles (EVs), the development of medium and large-sized lithium secondary batteries, which have high capacity and are electrochemically stable, is also underway.

As the demand for medium and large-sized lithium secondary batteries increases, the need for high-performance lithium secondary batteries is increasing, and secondary batteries with performances such as high output, high energy density, gas reduction effects, improved lifespan, etc., are also required. Thus, there is a demand for the development of an electrolyte suitable for such a secondary battery, and a multifunctional additive for improving the function of the electrolyte has begun to attract attention, and in particular, it is known that lithium difluorophosphate salt may help improve the function of the electrolyte. According to an impact on the market, there is an urgent need to develop lithium difluorophosphate salt with high purity capable of improving the life of a battery while having a low manufacturing cost.

### [Disclosure]

### [Technical Problem]

A method for using LiPF₆ is widely known as a conventional method for preparing lithium difluorophosphate salt, and may be schematically illustrated as in reaction formula 1 below:

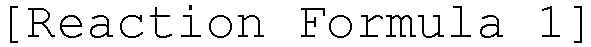

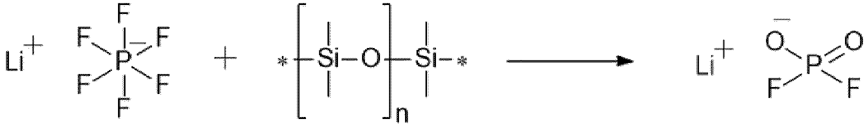

Above reaction may have a feature to use lithium hexafluorophosphate salt (LiPF₆) and various forms of siloxane without using water in order to prepare lithium difluorophosphate salt. However, the method has a disadvantage in that fluorosilane (SiF₂(CH₃)₂) gas, which is a toxic material, is generated as a by-product, and a large amount of acidic by-products remain in lithium difluorophosphate salt, which is a product. In addition, the method has a disadvantage in that the manufacturing cost is high because of using raw materials in a high price range such as lithium hexafluorophosphate salt (LiPF₆), which is also used as an electrolyte for a lithium secondary battery together with siloxane (-SiCH₃)₂O-). Thus, there is an urgent need for a novel method for preparing an environment-friendly lithium difluorophosphate salt which is more economical than the conventional preparation method and does not produce toxic by-products.

Accordingly, an object of the present invention is to provide a novel method for preparing lithium difluorophosphate salt in an environment-friendly and economical manner, which does not use expensive siloxane and lithium hexafluorophosphate salt (LiPF₆) and does not generate toxic fluorosilane gas.

In addition, another object of the present invention is to provide lithium difluorophosphate salt with high purity.

### [Technical Solution]

To solve the problems above, the present invention may provide a method for preparing lithium difluorophosphate salt, which includes:
step 1) reacting a phosphoryl halide (POX₃) compound of formula 2 below, an oxidizing agent (R1R2C=O) of formula 3 below, and lithium salt to prepare lithium dihalophosphate salt (LiPO₂X₂) of formula 4 below; and
step 2) reacting lithium dihalophosphate salt of formula 4 and fluoride salt of formula 5 below to prepare lithium difluorophosphate salt (LiPO₂F₂) of formula 1 below:

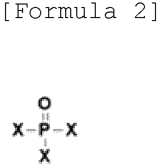

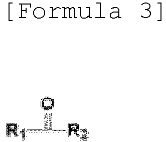

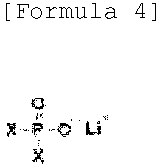

   [Formula 5] MFₙ

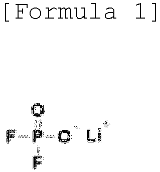

   in the above formulas,
   X is Cl, Br or I,
   R1 and R2 are each independently H, C1-10 alkyl group, phenyl group, OH, OR3, NH₂, NHR4, NR5R6, ONa, OK, or ONH₄,
   R3, R4, R5, and R6 are each independently C1-10 alkyl group or phenyl group,
   R1 and R2 together may form a ring having two to five carbon atoms which may additionally include one or more heteroatoms of O or N,
   M is H, Li, Na, K, Ca, Zn, Sb, Rb, Cs, or onium ion, and
   n is 1 or 2.

The present invention may also provide a method for preparing lithium difluorophosphate salt, which includes:
step 1') reacting a phosphoryl halide (POX₃) compound of formula 2 below, an oxidizing agent (R1R2C=O) of formula 3 below, and fluoride salt of formula 5 below to prepare difluorophosphate salt (MPO₂F₂) of formula 6 below; and
step 2') reacting difluorophosphate salt of formula 6 and lithium salt to prepare lithium difluorophosphate salt (LiPO₂F₂) of formula 1 below:

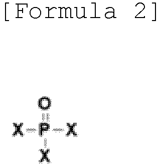

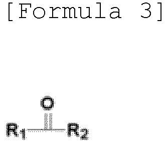

   [Formula 5] MFₙ

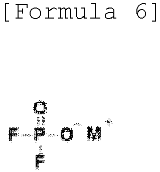

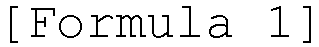

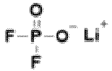

   in the above formulas,
   X is Cl, Br or I,
   R1 and R2 are each independently H, C1-10 alkyl group, phenyl group, OH, OR3, NH₂, NHR4, NR5R6, ONa, OK, or ONH₄,
   R3, R4, R5, and R6 are each independently C1-10 alkyl group or phenyl group,
   R1 and R2 together may form a ring having two to five carbon atoms which may additionally include one or more heteroatoms of O or N,
   M is H, Li, Na, K, Ca, Zn, Sb, Rb, Cs, or onium ion, and
   n is 1 or 2.

The present invention may also provide a method for preparing lithium difluorophosphate salt (LiPO₂F₂) of formula 1 below by
reacting a phosphoryl fluoride (POF₃) compound of formula 7 below, an oxidizing agent (R1R2C=O) of formula 3 below, and lithium salt to prepare lithium difluorophosphate salt (LiPO₂F₂) of formula 1 below: 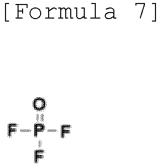 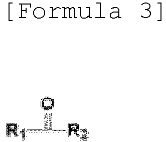 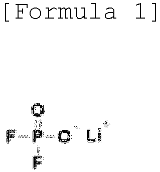 in the above formulas,
R1 and R2 are each independently H, C1-10 alkyl group, phenyl group, OH, OR3, NH₂, NHR4, NR5R6, ONa, OK, or ONH₄,
R3, R4, R5, and R6 are each independently C1-10 alkyl group or phenyl group, and
R1 and R2 together may form a ring having two to five carbon atoms which may additionally include one or more heteroatoms of O or N.

The present invention may also provide lithium difluorophosphate salt including 0-500 ppm by weight of F⁻, 0-500 ppm by weight of Cl⁻, 0-500 ppm by weight of SO₄²⁻, or 0-500 ppm by weight of PO₄³⁻.

### [Advantageous Effects]

A preparation method according to the present invention has an advantage of providing excellent economic feasibility by not using expensive lithium hexafluorophosphate salt (LiPF₆) and siloxane. In addition, the preparation method according to the present invention has an effect of preparing lithium difluorophosphate salt with high purity of 97% or more and high yield of 80% or more in an environment-friendly and relatively simple manner, which does not generate toxic fluorosilane gas. The lithium difluorophosphate salt of the present invention has an extremely low content of impurities of a metal ion and acidic ions such as hydrofluoric acid, hydrochloric acid, sulfuric acid, phosphoric acid, and the like, thereby providing an advantage of improving electrical properties, output, and gas reduction properties when used in an electrolyte for a lithium secondary battery.

### [Best Mode for Invention]

Hereinafter, the present invention will be described in more detail as follows. Terms and words used in the present specification and the claims shall not be interpreted as commonly-used or dictionary meanings, but shall be interpreted as meanings and concepts relevant to the technical idea of the present invention based on a principle that the inventor may appropriately define the concept of the term to explain his/her invention in the best way.

A conventional method for commercially producing lithium difluorophosphate salt (LiPO₂F₂) may be to use lithium hexafluorophosphate salt (LiPF₆). In most processes using lithium hexafluorophosphate salt (LiPF₆), it may be essential to build a separate purification facility because toxic gases such as hydrofluoric acid, fluorosilane or the like are generated. Furthermore, in the preparation method using lithium difluorophosphate salt (LiPO₂F₂), it may be difficult to completely remove hydrofluoric acid and fluorosilane generated as by-products, whereas when an electrolyte is produced, stored, and distributed using the lithium difluorophosphate salt containing such impurities, side reactions may occur over time, and more impurities may be generated, resulting in a secondary problem of reducing purity. In this case, when one of the by-products generated is hydrofluoric acid, which is dissolved in an electrolyte and injected into a battery, it may cause problems such as oxidizing an electrode in the battery and a metal battery packaging container.

In addition, since lithium hexafluorophosphate salt (LiPF₆) is essentially used for a lithium secondary battery electrolyte and is the most used material for the same, there may be a problem in that the price drastically increases as the demand for lithium secondary batteries increases. Thus, it may be urgent to develop a preparation technology without using lithium hexafluorophosphate salt (LiPF₆) in order to prepare lithium difluorophosphate salt (LiPO₂F₂) with high purity at a competitive price.

Accordingly, the present inventors have made endeavors to develop a novel environment-friendly and economical preparation method which does not use expensive siloxane and lithium hexafluorophosphate salt (LiPF₆) and does not generate toxic fluorosilane gas, thereby developing a method for using a phosphoryl halide (POX₃) compound, of which a starting material may be easily obtained at a low price, and completing the present invention. In other words, according to the present invention, phosphoryl halide may be easily prepared using an oxidizing agent containing a carbonyl group (C=O), and lithium difluorophosphate salt may be prepared with high purity and high yield in a simple, economical, and environment-friendly manner.

The present invention may provide a method for preparing lithium difluorophosphate salt, which includes:
step 1) reacting a phosphoryl halide compound of formula 2 below, an oxidizing agent of formula 3 below, and lithium salt to prepare lithium dihalophosphate salt of formula 4 below; and
step 2) reacting lithium dihalophosphate salt of formula 4 and fluoride salt of formula 5 below to prepare lithium difluorophosphate salt of formula 1 below:

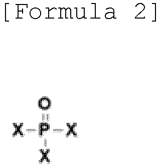

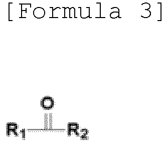

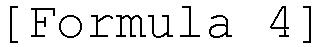

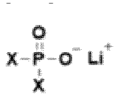

   [Formula 5] MFₙ

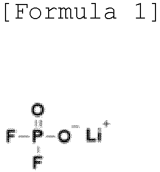

   in the above formulas,
   X is Cl, Br or I,
   R1 and R2 are each independently H, C1-10 alkyl group, phenyl group, OH, OR3, NH₂, NHR4, NR5R6, ONa, OK, or ONH₄,
   R3, R4, R5, and R6 are each independently C1-10 alkyl group or phenyl group,
   R1 and R2 together may form a ring having two to five carbon atoms which may additionally include one or more heteroatoms of O or N,
   M is H, Li, Na, K, Ca, Zn, Sb, Rb, Cs, or onium ion, and
   n is 1 or 2.

The method of the present invention may be schematically illustrated as in reaction formula 2 below:

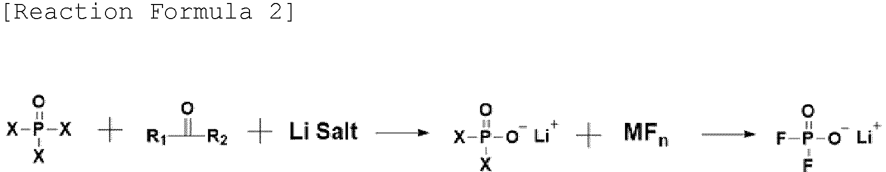

The present invention may also provide a method for preparing lithium difluorophosphate salt, which includes:
step 1') reacting a phosphoryl halide (POX₃) compound of formula 2 below, an oxidizing agent of formula 3 below, and fluoride salt of formula 5 below to prepare difluorophosphate salt of formula 6 below; and
step 2') reacting difluorophosphate salt of formula 6 and lithium salt to prepare lithium difluorophosphate salt of formula 1 below:

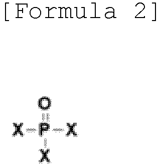

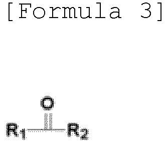

   [Formula 5] MFn

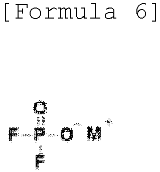

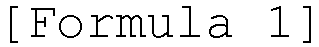

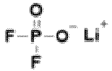

   in the above formulas,
   X is Cl, Br or I,
   R1 and R2 are each independently H, C1-10 alkyl group, phenyl group, OH, OR3, NH₂, NHR4, NR5R6, ONa, OK, or ONH₄,
   R3, R4, R5, and R6 are each independently C1-10 alkyl group or phenyl group,
   R1 and R2 together may form a ring having two to five carbon atoms which may additionally include one or more heteroatoms of O or N,
   M is H, Li, Na, K, Ca, Zn, Sb, Rb, Cs, or onium ion, and
   n is 1 or 2.

Above, the method of the present invention may be schematically illustrated as in reaction formula 3 below:

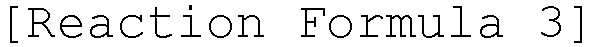

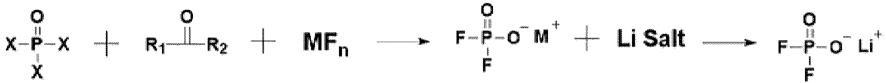

The present invention may also provide a method for preparing lithium difluorophosphate salt of formula 1 below by
reacting a phosphoryl fluoride (POF₃) compound of formula 7 below, an oxidizing agent of formula 3 below, and lithium salt: 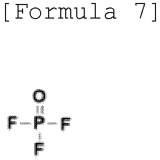 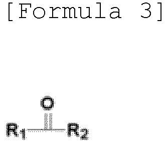 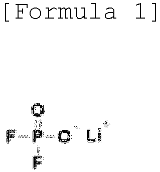 in the above formulas,
R1 and R2 are each independently H, C1-10 alkyl group, phenyl group, OH, OR3, NH₂, NHR4, NR5R6, ONa, OK, or ONH₄,
R3, R4, R5, and R6 are each independently C1-10 alkyl group or phenyl group, and
R1 and R2 together may form a ring having two to five carbon atoms which may additionally include one or more heteroatoms of O or N.

Above, the method of the present invention may be schematically illustrated as in reaction formula 4 below:

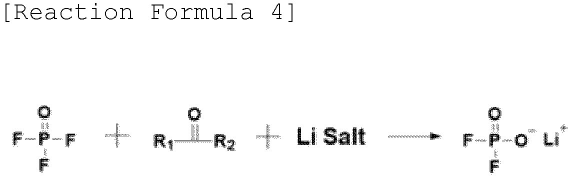

In the present invention, since lithium difluorophosphate salt is prepared using phosphoryl halide (POX₃) without using lithium hexafluorophosphate salt (LiPF₆), lithium difluorophosphate salt (LiPO₂F₂) with high purity may be prepared by suppressing the occurrence of hydrofluoric acid or fluorosilane and preventing side reactions.

Among conventional methods for preparing lithium difluorophosphate salt by oxidizing lithium hexafluorophosphate salt (LiPF₆), a representative example may be a method of using expensive siloxane as an oxidizing agent, and the method has a disadvantage in that an expensive reactant needs to be used, and a disadvantage in that hydrofluoric acid or fluorosilane are generated as by-products and remain in lithium difluorophosphate. Finally, a large yield loss may occur in the process of removing hydrofluoric acid, fluorosilane and the like, which are the remaining by-products. In addition, a separate purification process may be performed to remove unreacted siloxane. In other words, the conventional method for preparing lithium difluorophosphate may have problems in terms of economic feasibility and in terms of the generation of toxic by-products and the resultant problem of purification treatment cost, etc., whereas the present invention may have an advantage of having no such problems.

The present invention may have an advantage in that it uses phosphoryl halide instead of lithium hexafluorophosphate salt, and uses a compound having a carbonyl group (C=O) as an oxidizing agent, thereby preventing fluorosilane by-products from being generated and stably preparing high-purity lithium difluorophosphate without side reactions.

In above reaction formula **2,** the step of reacting a phosphoryl halide (POX₃) compound, a compound having a carbonyl group (C=O) as an oxidizing agent, and lithium salt and the step of reacting lithium dihalophosphate salt, which is the product of above step, and fluoride salt may be performed through a in situ reaction, or may be performed by recovering lithium dihalophosphate salt, which is an intermediate product, and then reacting with fluoride salt.

In above reaction formula **3,** the step of reacting a phosphoryl halide (POX₃) compound, a compound having a carbonyl group (C=O) as an oxidizing agent, and fluoride salt and the step of reacting difluorophosphate salt, which is the product of above step, and lithium salt may be performed through a in situ reaction, or may be performed by recovering difluorophosphate salt, which is an intermediate product, and then reacting with lithium salt.

The halide (X) of the phosphoryl halide (POX₃) compound used in the present invention may be any one selected from chloride (Cl), bromide (Br), and iodide (I), which are all usable. The phosphoryl halide (POX₃) compound may be preferably phosphoryl chloride.

In the present invention, the compound of formula 3 may be a material which may oxidize phosphoryl halide (POX₃) or phosphoryl fluoride (POF₃) and may not be limited as long as it has a carbonyl group (C=O) and may oxidize phosphoryl halide (POX₃) or phosphoryl fluoride (POF₃), preferably it may include formaldehyde, formic acid, acetic acid, methyl acetate, ethyl acetate, dimethyl carbonate, diethyl carbonate, ethyl methyl carbonate, dimethylformamide, methyl phenyl formamide, acetamide, dimethyl acetamide, cyanuric acid, cyanuric chloride, etc.

In the present invention, the lithium salt may be a material which producing lithium salt of dihalophosphoric acid or lithium salt of difluorophosphoric acid, and may be one or two or more selected from the group consisting of lithium acetate, lithium azide, lithium bicarbonate, lithium bisulfate, lithium carbonate, lithium fluoride, lithium chloride, lithium bromide, lithium iodide, lithium cyanide, lithium dodecaborate, lithium hydride, lithium hydroxide, lithium nitrate, lithium oxalate, lithium oxide, lithium perchlorate, lithium sulfate, lithium sulfide, or lithium amide, and a mixture thereof. The lithium salt may be preferably lithium carbonate and/or lithium chloride.

In the present invention, the MFₙ compound of formula 5 may be a fluorinating agent which replaces a halogen of phosphoryl halide (POX₃) or dihalophosphate salt with F, in which M may be H, Li, Na, K, Ca, Zn, Sb, Rb, Cs, or onium ion, and n may be 1 or 2.

The onium ion may be an onium ion including N or S.

The onium ion may be preferably an ammonium ion.

The preparation of lithium difluorophosphate of the present invention may be performed under a solvent.

The solvent may be preferably one or two or more selected from toluene, haloalkane-based, nitrile-based, ether-based, alcohol-based, ester-based, carbonate-based solvents, and the like. The solvent may be specifically dimethoxyethane, ethyl acetate, butyl acetate, toluene, chloroform, dichloromethane, dichloroethane, tetrahydrofuran, acetonitrile, and the like.

The preparation of lithium difluorophosphate of the present invention may be performed at 30 to 100°C, and may be performed under an inert gas atmosphere of nitrogen or argon. The preparation of lithium difluorophosphate may be performed by mixing the reactants, and then preferably stirring for five to 20 hours.

In order to prepare the lithium difluorophosphate of the present invention, lithium salt may be reacted in an amount of 1 to 1.5 equivalents with respect to 1 equivalent of phosphoryl halide or phosphoryl fluoride. The oxidizing agent may be reacted in an amount of 1 to 1.5 equivalents with respect to 1 equivalent of phosphoryl halide or phosphoryl fluoride. When the lithium salt and the oxidizing agent are used in the above amounts, lithium difluorophosphate may be prepared with high yield and high purity. In order to prepare the lithium difluorophosphate with high purity in the present invention, MFₙ of formula 5 may be reacted in an amount of 2 to 8 equivalents with respect to 1 equivalent of phosphoryl halide.

The process of obtaining a product after the step-by-step reaction may be a step of filtering a reaction solution and removing a reaction solvent, and may be a step of obtaining a crystal by removing a part of the reaction solvent and adding a poor solvent to the product.

The present invention may provide lithium difluorophosphate salt including 0-500 ppm by weight of F⁻, 0-500 ppm by weight of Cl⁻, 0-500 ppm by weight of SO₄²⁻, or 0-500 ppm by weight of PO₄³⁻.

The conventional lithium difluorophosphate salt may be prepared using lithium hexafluorophosphate salt and siloxane, and thus may contain a large amount of various acidic impurities.

On the contrary, since the lithium difluorophosphate salt of the present invention is prepared in a relatively mild manner by using a preparation method which does not generate acidic by-products, a final product may contain 0 to 500 ppm by weight of acidic impurities, in particular, F⁻, Cl⁻, SO₄²⁻ or PO₄³⁻ ion, respectively, in the lithium difluorophosphate salt. The lithium difluorophosphate salt of the present invention may preferably include 0 to 200 ppm by weight of F⁻, Cl⁻, SO₄²⁻ or PO₄³⁻ ion, respectively, more preferably 0 to 100 ppm by weight thereof, respectively, and even more preferably 0 to 50 ppm by weight thereof, respectively. The lithium difluorophosphate salt of the present invention may have a feature that it has preferably a total content of F⁻, Cl⁻, SO₄²⁻ and PO₄³⁻ ions in an amount of more than 0 to less than or equal to 200 ppm by weight, more preferably more than 0 to less than or equal to 150 ppm by weight.

When the lithium difluorophosphate salt with reduced impurities is used in an electrolyte for a lithium secondary battery, it has the advantage of improving electrical properties, output, and gas reduction properties.

### [Mode for Invention]

Hereinafter, preferred examples of the present invention will be described in more detail as follows. However, the present invention is not limited thereto. Hereinafter, ppm is ppm by weight.

### [Example]

### Example 1. Step-by-step preparation of LiPO₂F₂ using formic acid

### 1. Preparation of LiPO₂Cl₂ using formic acid

300 g of dimethoxyethane and 50 g (326 mmol) of phosphoryl chloride were weighed and added to a flask equipped with a stirrer, a condenser, and a thermometer under a nitrogen atmosphere, and then an internal temperature was cooled to 5°C and stirred. Then, 14.5 g (342 mmol) of lithium chloride was added thereto and stirred at a low temperature. After that, 15.7 g (341 mmol) of formic acid was slowly added dropwise thereto, and then the temperature was raised to 45°C and a reaction was performed for five hours. When the reaction was completed, the reaction solution was filtered and the resulting solution was concentrated. 150 g of hexane was added to the concentrate in a crude state, and precipitated crystals were filtered, and thus the filtered solids were dried to obtain 43.6 g (310 mmol) of lithium dichlorophosphate as white powder. (Yield 95%)

### 2. Preparation of LiPO₂F₂ using LiPO₂Cl₂

300 g of dimethoxyethane and 43.6 g (310 mmol) of lithium dichlorophosphate were added to a flask equipped with a stirrer, a condenser, and a thermometer under a nitrogen atmosphere and stirred at room temperature. Then, 45.8 g (1,237 mmol) of ammonium fluoride was added thereto, and then the temperature was slowly raised to 80°C, and a reaction was further performed for eight hours. When the reaction was completed, the reaction solution was filtered and the resulting solution was concentrated. 150 g of toluene was added to the concentrate in a crude state, and precipitated crystals were filtered, and thus the filtered solids were dried to obtain 30g (279 mmol) of lithium difluorophosphate as white powder. (Yield 90%, purity 99%, impurity anion content: F 18.4 ppm, Cl 4.4 ppm, SO₄ 18.4 ppm, PO₄ 12.2 ppm)

### Example 2. In situ preparation of LiPO₂F₂ using formic acid

300 g of dimethoxyethane and 50 g (326 mmol) of phosphoryl chloride were weighed and added to a flask equipped with a stirrer, a condenser, and a thermometer under a nitrogen atmosphere, and then an internal temperature was cooled to 5°C and stirred. Then, 14.5 g (342 mmol) of lithium chloride was added thereto and stirred at a low temperature. After that, 15.7 g (341 mmol) of formic acid was slowly added dropwise thereto, and then the temperature was raised to 45°C and a reaction was performed for five hours. After confirming the end of bubble generation, 45.8 g (1,237 mmol) of ammonium fluoride was added thereto, and then the temperature was slowly raised to 80°C, and a reaction was further performed for eight hours. When the reaction was completed, the reaction solution was filtered and the resulting solution was concentrated. 150 g of toluene was added to the concentrate in a crude state, and precipitated crystals were filtered, and thus the filtered solids were dried to obtain 30.6 g (284 mmol) of lithium difluorophosphate as white powder. (Yield 87%, purity 99%, impurity anion content: F 20.3 ppm, Cl 5.2 ppm, SO₄ 23.6 ppm, PO₄ 15.1 ppm)

### Example 3. Step-by-step preparation of LiPO₂F₂ using dimethylformamide

### 1. Preparation of NH₄PO₂F₂ using dimethylformamide

300 g of dimethoxyethane, 24 g (328 mmol) of dimethylformamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When the reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 36.1 g (303 mmol) of ammonium difluorophosphate as white powder. (Yield 93%)

### 2. Preparation of LiPO₂F₂ using NH₄PO₂F₂

300 g of dimethoxyethane, 36.1 g (303 mmol) of ammonium difluorophosphate, and 15.6 g (211 mmol) of lithium carbonate, and 5.1 g (121 mmol) of lithium chloride were weighed and added to a flask equipped with a stirrer, a condenser, and a thermometer under a nitrogen atmosphere, and then the temperature was raised to 50°C, and a reaction was performed for three hours. When the reaction was completed, the resulting mixture was cooled to room temperature, and then reaction solution was filtered and the resulting solution was concentrated. 150 g of toluene was added to the concentrate in a crude state, and precipitated crystals were filtered, and thus the filtered solids were dried to obtain 29.8 g (276 mmol) of lithium difluorophosphate as white powder. (Yield 91%, purity 98%, impurity anion content: F 21.3 ppm, Cl 6.0 ppm, SO₄ 24.6 ppm, PO₄ 13.9 ppm)

### Example 4. In situ preparation of LiPO₂F₂ using dimethylformamide

300 g of dimethoxyethane, 24 g (328 mmol) of dimethylformamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When a primary reaction was completed, 15.6 g (211 mmol) of lithium carbonate and 5.1 g (121 mmol) of lithium chloride were weighed and added thereto, and then it has been held and stirred for three hours at the temperature of 50°C. When a secondary reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 29.9 g (277 mmol) of lithium difluorophosphate as white powder. (Yield 85%, purity 99%, impurity anion content: F 24.7 ppm, Cl 6.1 ppm, SO₄ 28.4 ppm, PO₄ 14.3 ppm)

### Example 5. Step-by-step preparation of LiPO₂F₂ using acetamide

### 1. Preparation of NH₄PO₂F₂ using acetamide

300 g of dimethoxyethane, 19.4 g (328 mmol) of acetamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When the reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 35.3 g (297 mmol) of ammonium difluorophosphate as white powder. (Yield 91%)

### 2. Preparation of LiPO₂F₂ using NH₄PO₂F₂

300 g of dimethoxyethane, 35.3g (297mmol) of ammonium difluorophosphate, and 15.6 g (211 mmol) of lithium carbonate, and 5.1 g (121 mmol) of lithium chloride were weighed and added to a flask equipped with a stirrer, a condenser, and a thermometer under a nitrogen atmosphere, and then the temperature was raised to 50°C, and a reaction was performed for three hours. When the reaction was completed, the resulting mixture was cooled to room temperature, and then reaction solution was filtered and the resulting solution was concentrated. 150 g of toluene was added to the concentrate in a crude state, and precipitated crystals were filtered, and thus the filtered solids were dried to obtain 28.8 g (267 mmol) of lithium difluorophosphate as white powder. (Yield 90%, purity 98%, impurity anion content: F 27.4 ppm, Cl 6.9 ppm, SO₄ 29.1 ppm, PO₄ 15.5 ppm)

### Example 6. In situ preparation of LiPO₂F₂ using acetamide

300 g of dimethoxyethane, 19.4 g (328 mmol) of acetamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When a primary reaction was completed, 15.6 g (211 mmol) of lithium carbonate and 5.1 g (121 mmol) of lithium chloride were weighed and added thereto, and then it has been held and stirred for three hours at the temperature of 50°C. When a secondary reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 28.8 g (267 mmol) of lithium difluorophosphate as white powder. (Yield 82%, purity 97%, impurity anion content: F 32.4 ppm, Cl 7.4 ppm, SO₄ 35.6 ppm, PO₄ 16.8 ppm)

### Example 7. Step-by-step preparation of LiPO₂F₂ using dimethyl acetamide

### 1. Preparation of NH₄PO₂F₂ using dimethyl acetamide

300 g of dimethoxyethane, 28.6 g (328 mmol) of dimethyl acetamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When the reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 33.7 g (283 mmol) of ammonium difluorophosphate as white powder. (Yield 87%)

### 2. Preparation of LiPO₂F₂ using NH₄PO₂F₂

300 g of dimethoxyethane, 33.7g (283mmol) of ammonium difluorophosphate, and 15.6 g (211 mmol) of lithium carbonate, and 5.1 g (121 mmol) of lithium chloride were weighed and added to a flask equipped with a stirrer, a condenser, and a thermometer under a nitrogen atmosphere, and then the temperature was raised to 50°C, and a reaction was performed for three hours. When the reaction was completed, the resulting mixture was cooled to room temperature, and then reaction solution was filtered and the resulting solution was concentrated. 150 g of toluene was added to the concentrate in a crude state, and precipitated crystals were filtered, and thus the filtered solids were dried to obtain 27.5 g (254 mmol) of lithium difluorophosphate as white powder. (Yield 92%, purity 97%, impurity anion content: F 35.3 ppm, Cl 7.6 ppm, SO4 34.8 ppm, PO₄ 21.1 ppm)

### Example 8. In situ preparation of LiPO₂F₂ using dimethyl acetamide

300 g of dimethoxyethane, 28.6 g (328 mmol) of dimethyl acetamide, and 48 g (1,296 mmol) of ammonium fluoride were weighed and added to a flask equipped with a stirrer, a condenser, and a thermometer under a nitrogen atmosphere, and then an internal temperature was cooled to 40°C and stirred. Then, 50 g (326 mmol) of phosphoryl chloride was slowly added dropwise thereto, and then the temperature was raised to 50°C and a reaction was performed for 18 hours. When a primary reaction was completed, 15.6 g (211 mmol) of lithium carbonate and 5.1 g (121 mmol) of lithium chloride were weighed and added thereto, and then it has been held and stirred for three hours at the temperature of 50°C. When a secondary reaction was completed, the resulting mixture was cooled to room temperature, and then reaction solution was filtered and the resulting solution was concentrated. 150 g of hexane was added to the concentrate in a crude state, and precipitated crystals were filtered, and thus the filtered solids were dried to obtain 28.1 g (260 mmol) of lithium difluorophosphate as white powder. (Yield 80%, purity 98%, impurity anion content: F 42.2 ppm, Cl 8.5 ppm, SO₄ 41.9 ppm, PO₄ 23.3 ppm)

### Example 9. Preparation of LiPO₂F₂ using phosphoryl fluoride and formic acid

300 g of dimethoxyethane and 50 g (481 mmol) of phosphoryl fluoride were weighed and added to a flask equipped with a stirrer, a condenser, and a thermometer under a nitrogen atmosphere, and then an internal temperature was cooled to 5°C and stirred. Then, 13.1 g (505 mmol) of lithium fluoride was added thereto and stirred at a low temperature. After that, 23.2 g (505 mmol) of formic acid was slowly added dropwise thereto, and then the temperature was raised to 45°C and a reaction was performed for five hours. When the reaction was completed, the reaction solution was filtered and the resulting solution was concentrated. 150 g of hexane was added to the concentrate in a crude state, and precipitated crystals were filtered, and thus the filtered solids were dried to obtain 46.7 g (433 mmol) of lithium difluorophosphate as white powder. (Yield 90%, purity 99%, impurity anion content: F 16.2 ppm, Cl 2.1 ppm, SO₄ 13.3 ppm, PO₄ 10.5 ppm)

**[Table 1]**

| Classification | Preparation Method | Oxidizing agent | Yield | Purity |
|---|---|---|---|---|
| Example 1 | Step-by-step | Formic acid | 86% | 99% |
| Example 2 | In-situ | | 87% | 99% |
| Example 3 | Step-by-step | Dimethylformamide | 85% | 98% |
| Example 4 | In-situ | | 85% | 99% |
| Example 5 | Step-by-step | Acetamide | 82% | 98% |
| Example 6 | In-situ | | 82% | 97% |
| Example 7 | Step-by-step | Dimethylacetamide | 80% | 97% |
| Example 8 | In-situ | | 80% | 98% |
| Example 9 | POF₃ used | Formic acid | 90% | 99% |

### [Industrial Applicability]

The present invention relates to a method for preparing lithium difluorophosphate salt with high purity and high yield without using lithium hexafluorophosphate salt. According to the present invention, lithium difluorophosphate salt may be economically prepared. In addition, the present invention may provide a high-purity lithium difluorophosphate salt with reduced impurities and thus may improve electrochemical properties, provide high output, reduce gas, and the like when using the same in an electrolyte for a lithium secondary battery.

## Claims

1. A method for preparing lithium difluorophosphate salt, the method comprising:
step 1) reacting a phosphoryl halide (POX₃) compound of formula 2 below, an oxidizing agent of formula 3 below, and lithium salt to prepare lithium dihalophosphate salt of formula 4 below; and
step 2) reacting lithium dihalophosphate salt of formula 4 and fluoride salt of formula 5 below to prepare lithium difluorophosphate salt of formula 1 below: 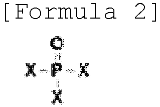 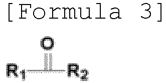 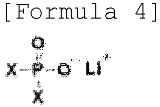
[Formula 5] MFₙ 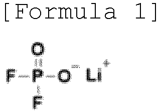
in the above formulas,
X is Cl, Br or I,
R1 and R2 are each independently H, C1-10 alkyl group, phenyl group, OH, OR3, NH₂, NHR4, NR5R6, ONa, OK, or ONH₄,
R3, R4, R5, and R6 are each independently C1-10 alkyl group or phenyl group,
R1 and R2 together may form a ring having two to five carbon atoms which may additionally include one or more heteroatoms of O or N,
M is H, Li, Na, K, Ca, Zn, Sb, Rb, Cs, or onium ion, and
n is 1 or 2.

2. A method for preparing lithium difluorophosphate salt, the method comprising:
step 1') reacting a phosphoryl halide (POX₃) compound of formula 2 below, an oxidizing agent of formula 3 below, and fluoride salt of formula 5 below to prepare difluorophosphate salt of formula 6 below; and
step 2') reacting difluorophosphate salt of formula 6 and lithium salt to prepare lithium difluorophosphate salt of formula 1 below: 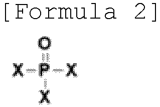 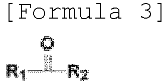
[Formula 5] MFₙ 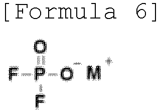 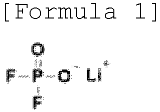
in the above formulas,
X is Cl, Br or I,
R1 and R2 are each independently H, C1-10 alkyl group, phenyl group, OH, OR3, NH₂, NHR4, NR5R6, ONa, OK, or ONH₄,
R3, R4, R5, and R6 are each independently C1-10 alkyl group or phenyl group,
R1 and R2 together may form a ring having two to five carbon atoms which may additionally include one or more heteroatoms of O or N,
M is H, Li, Na, K, Ca, Zn, Sb, Rb, Cs, or onium ion, and
n is 1 or 2.

3. A method for preparing lithium difluorophosphate salt, the method comprising:
reacting a phosphoryl fluoride (POF₃) compound of formula 7 below, an oxidizing agent of formula 3 below, and lithium salt to prepare lithium difluorophosphate salt of formula 1 below: 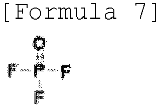 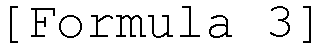 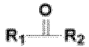 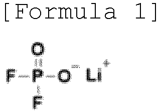 in the above formulas,
R1 and R2 are each independently H, C1-10 alkyl group, phenyl group, OH, OR3, NH₂, NHR4, NR5R6, ONa, OK, or ONH₄,
R3, R4, R5, and R6 are each independently C1-10 alkyl group or phenyl group, and
R1 and R2 together may form a ring having two to five carbon atoms which may additionally include one or more heteroatoms of O or N.

4. The method of claim 1, 2 or 3, wherein the oxidizing agent of formula 3 is at least one selected from the group consisting of formaldehyde, formic acid, acetic acid, methyl acetate, ethyl acetate, dimethyl carbonate, diethyl carbonate, ethyl methyl carbonate, dimethylformamide, methyl phenyl formamide, acetamide, dimethyl acetamide, cyanuric acid, and cyanuric chloride.

5. The method of claim 1, 2 or 3, wherein the lithium salt is one or two or more selected from the group consisting of lithium acetate, lithium azide, lithium bicarbonate, lithium bisulfate, lithium carbonate, lithium fluoride, lithium chloride, lithium bromide, lithium iodide, lithium cyanide, lithium dodecarbonate, lithium hydride, lithium hydroxide, lithium nitrate, lithium oxalate, lithium oxide, lithium perchlorate, lithium sulfate, lithium sulfide, lithium amide, and a mixture thereof.

6. The method of claim 1, 2 or 3, wherein preparation of lithium difluorophosphate is performed under a solvent.

7. The method of claim 6, wherein the solvent is one or two or more selected from the group consisting of toluene, haloalkanes, nitriles, ethers, alcohols, esters and carbonates.

8. The method of claim 1 or 2, wherein lithium salt is reacted in an amount of 1 to 1.5 equivalents with respect to 1 equivalent of phosphoryl halide.

9. The method of claim 3, wherein lithium salt is reacted in an amount of 1 to 1.5 equivalents with respect to 1 equivalent of phosphoryl fluoride.

10. The method of claim 1 or 2, wherein the oxidizing agent is reacted in an amount of 1 to 1.5 equivalents with respect to 1 equivalent of phosphoryl halide.

11. The method of claim 3, wherein the oxidizing agent is reacted in an amount of 1 to 1.5 equivalents with respect to 1 equivalent of phosphoryl fluoride.

12. The method of claim 1 or 2, wherein MFₙ is reacted in an amount of 2 to 8 equivalents with respect to 1 equivalent of phosphoryl halide.

13. Lithium difluorophosphate salt comprising 0-500 ppm by weight of F⁻, 0-500 ppm by weight of Cl⁻, 0-500 ppm by weight of SO₄²⁻, or 0-500 ppm by weight of PO₄³⁻.

14. Lithium difluorophosphate salt of claim 13, wherein a sum of contents of F⁻, Cl⁻, SO₄²⁻ and PO₄³⁻ ions is greater than 0 and less than or equal to 200 ppm by weight.
